(19)

**Europäisches Patentamt**

**European Patent Office**

**Office européen des brevets**

(11) **EP 1 559 471 A1**

(12) **EUROPEAN PATENT APPLICATION**

(43) Date of publication:
03.08.2005 Bulletin 2005/31

(51) Int Cl.⁷: **B01D 59/32**, B01D 59/40,
C01B 5/02

(21) Application number: 04020633.6

(22) Date of filing: 31.08.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **28.01.2004 JP 2004020086**

(71) Applicant: **Inter-University Research Institute
Corporation
National Institutes of Natural Sciences
Toki City Gifu Pref. (JP)**

(72) Inventors:
• **Sugiyama, Takahiko
Toki City Gifu Pref. (JP)**

• **Asakura, Yamato
Nagoya City Aichi Pref. (JP)**
• **Uda, Tatsuhiko
Tajimi City Gifu Pref. (JP)**
• **Yamamoto, Ichiro
Nagoya City Aichi Pref. (JP)**
• **Enokida, Youichi
Nagoya City Aichi Pref. (JP)**

(74) Representative: **von Hellfeld, Axel, Dr. Dipl.-Phys.
Wuesthoff & Wuesthoff
Patent- und Rechtsanwälte
Schweigerstrasse 2
81541 München (DE)**

(54) **Method for separating a hydrogen isotope, and apparatus for separating the same hydrogen isotope**

(57)     An atmosphere containing a hydrogen gas containing a hydrogen isotope, a water and a water vapor is disposed under a given condition of reduce pressure. Then, a process temperature for the atmosphere is controlled commensurate with the pressure of the atmosphere to control partial pressures of the hydrogen gas and the water vapor, and thus, control the separating performance of the hydrogen isotope from the hydrogen gas through a hydrogen-water chemical exchange reaction.

*FIG. 1*

EP 1 559 471 A1

**Description**

BACKGROUND OF THE INVENTION

Field of the Invention

This invention relates to a method for separating a hydrogen isotope and an apparatus for separating the same hydrogen isotope.

Description of the prior art

As a method for separating and concentrating a tritium component from a tritium-containing water is proposed a method utilizing hydrogen-water chemical exchange reaction which has a large separation factor and can treat a large amount of tritium-containing water. In the hydrogen-water chemical exchange reaction, since the equilibrium constants in isotope exchange reaction between a hydrogen gas and a water vapor and between the water vapor and a water are increased as the chemical exchange reaction temperature is decreased, it is expected that by decreasing the process temperature, the separating performance of the tritium component can be enhanced.

However, when the process temperature is decreased, the partial pressure of the water vapor to be used in the chemical exchange reaction is decreased, so that the separating performance of the tritium component is reduced.

SUMMERY OF THE INVENTION

It is an object of the present invention to enhance the separating performance of a hydrogen isotope utilizing the hydrogen-water chemical exchange reaction.

In order to achieve the above object, this invention relates to a method for separating a hydrogen isotope, comprising the steps of:

disposing an atmosphere containing a hydrogen gas containing said hydrogen isotope, a water and a water vapor under a given condition of reduce pressure, and

controlling a process temperature for said atmosphere commensurate with a pressure of said atmosphere to control partial pressures of said hydrogen gas and said water vapor and control a separating performance of said hydrogen isotope from said hydrogen gas through a hydrogen-water chemical exchange reaction.

Also, this invention relates to an apparatus for separating a hydrogen isotope, comprising:

a separating column for supporting an atmosphere containing a hydrogen gas containing said hydrogen isotope, a water and a water vapor and separating said hydrogen isotope from said hydrogen gas through a hydrogen-water chemical exchange reaction, and

a temperature controlling means for controlling a process temperature for said atmosphere commensurate with a pressure of said atmosphere, controlling partial pressures of said hydrogen gas and said water vapor and controlling a separating performance of said hydrogen isotope from said hydrogen gas.

The inventors had intensely studied to achieve the above-mentioned object. As a result, they found out that if the atmosphere containing a hydrogen gas containing a given hydrogen isotope, a water and a water vapor, which is to be supplied to a hydrogen-water chemical exchange reaction, is disposed under a given condition of reduce pressure, the separating performance of the hydrogen isotope can be maximized at a given temperature under a given reduction in pressure. Therefore, if the atmosphere is formed in a given separating column under a given condition of reduce pressure, and the process temperature for the atmosphere is controlled appropriately under the condition of reduced pressure with monitoring the process temperature with a given temperature controlling means, the separating performance of the hydrogen isotope from the hydrogen gas can be maximized.

Herein, it is not necessarily required to set the process temperature of the atmosphere to an optimum temperature under the condition of reduced pressure, but to a given temperature commensurate with the intended separating performance of the hydrogen isotope.

In a preferred embodiment of the present invention, the pressure of the atmosphere is set to 90kPa or below. In this case, the separating performance of the hydrogen isotope utilizing the hydrogen-water chemical exchange reaction can be more enhanced.

In another embodiment of the present invention, the temperature increase from the process temperature of the atmosphere in the separating column under the static separating process utilizing the hydrogen-water chemical exchange reaction is detected. In this case, the leak of the separating column into the outside therefrom can be detected, so that the leak of the total apparatus including the separating column can be detected early, and a fatal accident such as a hydrogen explosion can be prevented.

Herein, the above-mentioned leak detection method can be generally employed for another hydrogen isotope separating method utilizing the hydrogen-water chemical exchange reaction, in addition to the hydrogen isotope separating method of the present invention wherein the given process temperature of the atmosphere is set under the condition of reduced pressure.

As mentioned above, according to the present invention can be enhanced the separating performance of the hydrogen isotope utilizing the hydrogen-water chemical exchange reaction.

Brief Description of the Drawings

For better understanding of the present invention, reference is made to the attached drawings, wherein

Fig. 1 is a structural view illustrating a separating apparatus of hydrogen isotope according to the present invention, and

Fig. 2 is a graph illustrating the dependence of the separating performance of tritium component on the pressure and the process temperature of the atmosphere in the separating column under the tritium component separating process.

DESCRIPTION OF THE PREFERRED EMBODIMENTS

This invention will be described in detail with reference to the accompanying drawings.

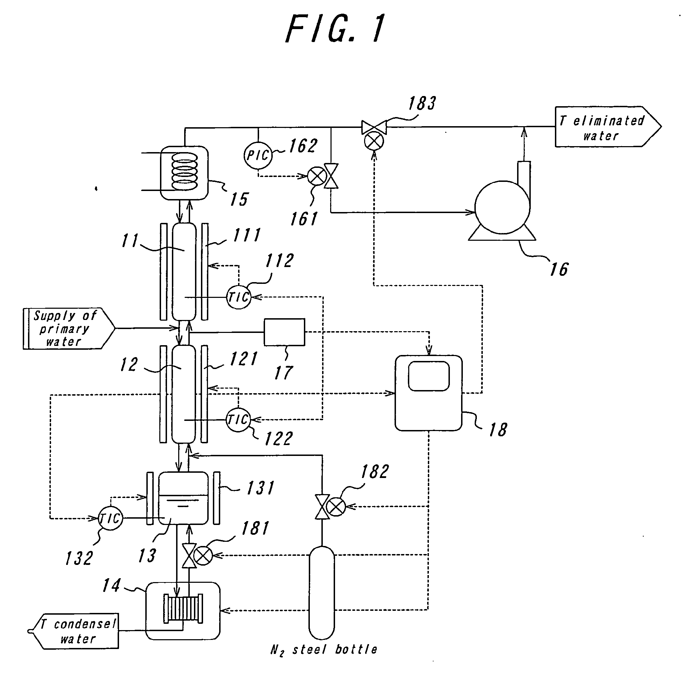

Fig. 1 is a structural view illustrating a separating apparatus of hydrogen isotope according to the present invention. In this embodiment, a tritium component is separated from a light water by utilizing the separating apparatus illustrated in Fig. 1.

The separating apparatus illustrated in Fig. 1 includes separating columns 11 and 12 which are arranged vertically in two stage, a humidifier 13 and an SPE electrolytic bath 14 which are arranged downwardly and continuously from the separating columns, a condenser 15 and a vacuum pump 16 which are arranged upwardly and continuously from the separating columns, a tritium monitor 17 and a temperature monitor process controller 18 which are arranged continuously from between the separating columns 11 and 12.

In the separating columns 11 and 12 are formed catalyst layers (not shown) supporting platinum catalysts respectively to cause a first chemical exchange reaction between a hydrogen gas and a water vapor and absorbing layers (not shown) respectively to cause a second chemical exchange reaction between the water vapor and a liquid.

On the peripheries of the separating columns 11 and 12 are provided heaters 111 and 121 so that the atmospheres in the separating columns 11 and 12 are set to respective process temperatures with temperature controllers 112 and 122. Also, on the periphery of the humidifier 13 is provided a heater 131 so that a water vapor is generated through the heating a water in the humidifier 13.

The light water as a primary water containing the tritium component is supplied into the separating columns 11 and 12, and then, introduced into the SPE electrolytic bath 14 via the humidifier 13. The light water containing the tritium component is electrolyzed in the SPE electrolytic bath 14, and converted into a hydrogen gas and an oxygen gas. The hydrogen gas contains the tritium component as a hydrogen isotope. The hydrogen gas is introduced into the humidifier 13 to be saturated with the water vapor, and introduced into the separating columns 11 and 12.

On the other hand, the hydrogen gas and the water vapor are partially introduced into the condenser 15 through the separating columns 11 and 12 with the vacuum pump 16. Then, the introduced water vapor is enriched in the condenser 15 through heat exchange, and returned as a liquid water into the separating columns 11 and 12. The introduced hydrogen gas is discharged outside with the vacuum pump 16.

In this case, at the catalyst layers in the separating columns 11 and 12 is caused the following first chemical exchange reaction:

$$H_2O(vapor)+HT(gas) \Leftrightarrow HTO(vapor)+H_2(gas) \qquad (1)$$

Moreover, at the absorbing layers in the separating columns 11 and 12 is caused the following second chemical exchange reaction:

$$H_2O(liquid)+HTO(vapor) \Leftrightarrow HTO(liquid)+H_2O(vapor) \tag{2}$$

In the second chemical exchange reaction, the water vapor intermediate HTO(vapor) is counter-flowed against the enriched in the condenser 15 and returned liquid water $H_2O$(liquid). As a result, the tritium component is separated and enriched as the liquid reacted water HTO(liquid).

The liquid reacted water is down-flowed through the separating columns 11; 12 and the SPE electrolytic bath 14, and extracted outside from the separating apparatus. On the other hand, the hydrogen gas $H_2$ (gas) generated in the first chemical exchange reaction relating to the separation of the HTO (vapor) is up-flowed through the separating columns 11 and 12, and discharged outside from the separating apparatus.

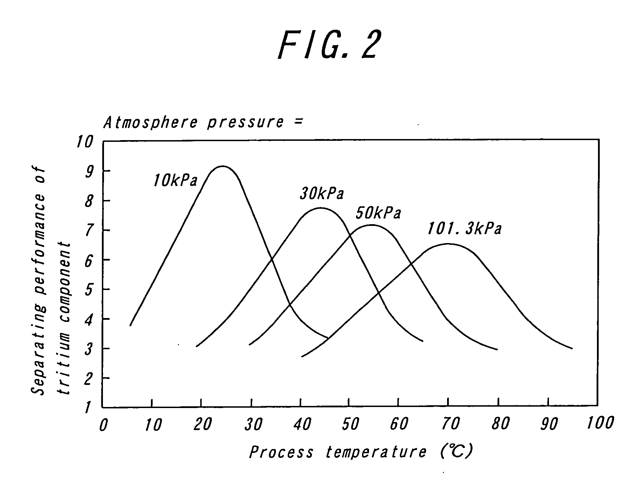

Fig. 2 is a graph illustrating the dependence of the separating performance of the tritium component on the pressure and process temperature of the atmospheres in the separating columns 11 and 12 under the tritium component separating process. As is apparent from Fig. 2, the separating performance of the tritium component exhibits different process temperature dependences commensurate with the respective atmosphere pressures in the separating columns 11 and 12. Then, it is apparent from Fig. 2 that the optimum process temperatures to maximize the respective separating performances of the tritium component are different from one another commensurate with the corresponding atmosphere pressures in the separating columns 11 and 12.

Herein, in the separating apparatus illustrated in Fig. 1, the tritium component is separated, enriched and down-flowed as the liquid reacted water HTO (liquid). Therefore, the concentration of the tritium component becomes low at the upper sides of the separating columns 11 and 12, and becomes high at the lower sides thereof. As a result, if the separating performance of the tritium component is enhanced, the separating performance of the tritium component can be represented by the concentration ratio of the tritium component at the lower sides to the upper sides of the separating columns 11 and 12 (that is, the concentration of the tritium component at the lower side of the separating column/the concentration of the tritium component at the upper side of the separating column).

In this point of view, the separating performance of the tritium component illustrated in Fig. 2 is defined indirectly from the concentration ratio of the tritium component at the lower sides to the upper sides of the separating columns 11 and 12 (the concentration of the tritium component at the lower side of the separating column/the concentration of the tritium component at the upper side of the separating column).

In this embodiment, the concentration ratio of the tritium component is monitored by a tritium monitor 17. Concretely, the tritium component at the upper side of the separating column 12 is monitored, and the process temperatures of the atmospheres in the separating columns 11 and 12 are controlled by driving the temperature controllers 112 and 122 with the temperature monitor process controller 18 and by using the heaters 111 and 121 so that the tritium component at the upper side of the separating column 12 becomes minimum (that is, the tritium component at the lower side of the separating column 12 becomes maximum, and thus, the separating performance of the tritium component becomes maximum).

As is apparent from Fig. 2, the separating performance of the tritium component is increased as the atmosphere pressures in the separating columns 11 and 12 are decreased. For example, in order to realize a practical tritium component separating performance, the atmosphere pressures are set to 90kPa or below. In order to effect the tritium component separation utilizing the hydrogen-water vapor chemical exchange reaction, however, the atmosphere pressures are set only to 10kPa.

The above-mentioned process can be applied in order to obtain a given separating performance of the tritium component, in addition to maximizing the separating performance of the tritium component at the designed pressure. In this case, the process temperature is controlled appropriately so as to obtain the separating performance of the tritium component.

On the other hand, in the tritium component separating process utilizing the separating apparatus illustrated in Fig. 1, the atmospheres in the separating columns 11 and 12 are maintained under a condition of reduced pressure. Therefore, if external leak is caused at the separating columns 11 and/or 12, the atmosphere temperatures in the separating columns 11 and/or 12 are remarkably increased by the chemical reaction between a hydrogen component and an oxygen component at the catalyst layers. Therefore, if the temperature increase of the atmosphere temperature from the process temperature is monitored with the temperature monitor process controller 18, the external leak at the separating columns 11 and/or 12 can be detected.

If the external leak is caused at the separating columns 11 and/or 12, the operation of the SPE electrolytic bath 14 is stopped and the heating of the separating columns 11 and 12 is stopped. Then, an emergency valve 181 is closed and emergency valves 182 and 183 are opened so that the interiors of the separating columns 11 and 12 are substituted and charged with a nitrogen gas.

The external leak at the separating columns 11 and 12 utilizing the temperature monitor process controller 18 can be carried out with or in separation from the separating process of the tritium component utilizing the optimization

**EP 1 559 471 A1**

of the atmosphere temperature and the process temperature.

Although the present invention was described in detail with reference to the above examples, this invention is not limited to the above disclosure and every kind of variation and modification may be made without departing from the scope of the present invention. Particularly, the present invention can be applied to the separation and the enrichment of a tritium component from a heavy water, in addition to the separation and the enrichment of the tritium component from the light water as described above.

**Claims**

1. A method for separating a hydrogen isotope, comprising the steps of:

   disposing an atmosphere containing a hydrogen gas containing said hydrogen isotope, a water and a water vapor under a given condition of reduce pressure, and
   controlling a process temperature for said atmosphere commensurate with a pressure of said atmosphere to control partial pressures of said hydrogen gas and said water vapor and control a separating performance of said hydrogen isotope from said hydrogen gas through a hydrogen-water chemical exchange reaction.

2. The separating method as defined in claim 1, wherein said separating performance of said hydrogen isotope is optimized by controlling said pressure of said atmosphere and said process temperature for said atmosphere.

3. The separating method as defined in claim 1 or 2, wherein said pressure of said atmosphere is set to 90kPa or below.

4. The separating method as defined in any one of claims 1-3, wherein said hydrogen isotope is separated as a liquid reacted water through a first chemical exchange reaction wherein a water vapor intermediate containing said hydrogen isotope is obtained through a chemical exchange reaction between said hydrogen gas containing said hydrogen isotope and said water vapor and through a second chemical exchange reaction wherein said liquid reacted water containing said hydrogen isotope is obtained through a chemical exchange reaction between said water vapor intermediate and a liquid water.

5. The separating method as defined in claim 4, wherein said first chemical exchange reaction is performed via a catalyst disposed in a given separating column.

6. The separating method as defined in claim 4 or 5, wherein said second chemical exchange reaction is performed by counter-flowing said water vapor intermediate against said liquid water in a given separating column.

7. The separating method as defined in any one of claims 1-6, wherein said hydrogen isotope is tritium.

8. The separating method as defined in claim 7, wherein said hydrogen gas is obtained by electrolyzing a water.

9. The separating method as defined in any one of claims 1-8, further comprising the step of detecting a leak of said atmosphere under a static separating process by monitoring a temperature increase of said atmosphere from said process temperature.

10. A method for separating a hydrogen isotope wherein an atmosphere containing a hydrogen gas containing said hydrogen isotope, a water and a water vapor is disposed under a given condition of reduce pressure and a given process temperature, and said hydrogen isotope is separated from said hydrogen gas, comprising a step of detecting a leak of said atmosphere under a static separating process by monitoring a temperature increase of said atmosphere from said process temperature.

11. An apparatus for separating a hydrogen isotope, comprising:

   a separating column for supporting an atmosphere containing a hydrogen gas containing said hydrogen isotope, a water and a water vapor and separating said hydrogen isotope from said hydrogen gas through a hydrogen-water chemical exchange reaction, and
   a temperature controlling means for controlling a process temperature for said atmosphere commensurate with a pressure of said atmosphere, controlling partial pressures of said hydrogen gas and said water vapor and controlling a separating performance of said hydrogen isotope from said hydrogen gas.

12. The separating apparatus as defined in claim 11, wherein said temperature controlling means is so constructed that a separating performance of said hydrogen isotope is optimized by controlling said pressure of said atmosphere and said process temperature for said atmosphere.

13. The separating apparatus as defined in claim 11 or 12, wherein said temperature controlling means detects a temperature increase of said atmosphere from said process temperature due to a leak of said separating column into an outside therefrom, and stops a separating operation of said hydrogen isotope from said hydrogen gas through said hydrogen-water chemical exchange reaction in said separating column.

14. The separating apparatus as defined in any one of claims 11-13, wherein said separating column includes a catalyst for performing a first chemical exchange reaction to obtain a water vapor intermediate containing said hydrogen isotope through a chemical exchange reaction between said hydrogen gas containing said hydrogen isotope and said water vapor.

15. The separating apparatus as defined in claim 14, wherein in said separating column, in order to perform a second chemical exchange reaction to obtain a liquid reacted water containing said hydrogen isotope through a chemical exchange reaction between said water vapor intermediate and a liquid water.

16. The separating apparatus as defined in any one of claims 11-15, wherein said hydrogen isotope is tritium, further comprising an electrolytic bath for obtaining a hydrogen gas containing said tritium from a water through electrolysis.

17. An apparatus for separating a hydrogen isotope, comprising:

a separating column for supporting an atmosphere containing a hydrogen gas containing said hydrogen isotope, a water and a water vapor and separating said hydrogen isotope from said hydrogen gas through a hydrogen-water chemical exchange reaction, and
a temperature controlling means for detecting a temperature increase of said atmosphere from said process temperature due to a leak of said atmosphere outside from said separating column, and stopping a separating operation of said hydrogen isotope from said hydrogen gas through said hydrogen-water chemical exchange reaction in said separating column.

# FIG. 1

*183*

*T eliminated water*

PIC *162*

*15*

*11* | *111*

*112* TIC

Supply of primary water

*12* | *121*

*122* TIC

*17*

*161*

*16*

*18*

*131*

*182*

*132* TIC *13* *181*

*14*

T condense/ water

N₂ steel bottle

# FIG. 2

Atmosphere pressure =

Separating performance of tritium component vs Process temperature (℃)

10kPa, 30kPa, 50kPa, 101.3kPa

**European Patent Office**

## EUROPEAN SEARCH REPORT

Application Number

EP 04 02 0633

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | US 4 217 332 A (HINDIN SAUL G ET AL) 12 August 1980 (1980-08-12) ----- | | B01D59/32 B01D59/40 C01B5/02 |
| A | US 3 974 048 A (BUTLER JOHN P ET AL) 10 August 1976 (1976-08-10) ----- | | |

TECHNICAL FIELDS
SEARCHED (Int.Cl.7)

B01D
C01B

The present search report has been drawn up for all claims

| Place of search | Date of completion of the search | Examiner |
|---|---|---|
| Munich | 28 October 2004 | Polesak, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EP 1 559 471 A1**

**ANNEX TO THE EUROPEAN SEARCH REPORT
ON EUROPEAN PATENT APPLICATION NO.**

EP 04 02 0633

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2004

| Patent document cited in search report | | Publication date | Patent family member(s) | | Publication date |
|---|---|---|---|---|---|
| US 4217332 | A | 12-08-1980 | CA | 1113690 A1 | 08-12-1981 |
| | | | CA | 1129180 A2 | 10-08-1982 |
| | | | DE | 2727306 A1 | 29-12-1977 |
| | | | FR | 2354805 A1 | 13-01-1978 |
| | | | GB | 1585556 A | 04-03-1981 |
| | | | JP | 1347725 C | 13-11-1986 |
| | | | JP | 52156297 A | 26-12-1977 |
| | | | JP | 61012739 B | 09-04-1986 |
| US 3974048 | A | 10-08-1976 | CA | 1014515 A1 | 26-07-1977 |
| | | | DE | 2518272 A1 | 20-11-1975 |
| | | | FR | 2269493 A1 | 28-11-1975 |
| | | | GB | 1449107 A | 15-09-1976 |
| | | | IT | 1032798 B | 20-06-1979 |

EPO FORM P0459